# EUROPÄISCHE PATENTSCHRIFT

(11) **EP 0 524 270 B1**
(45) Veröffentlichungstag und Bekanntmachung des Hinweises auf die Patenterteilung: **17.04.1996**
(21) Anmeldenummer: 91919269.0
(22) Anmeldetag: 14.10.1991
(51) Int. Cl.: A01G 1/06

(54) **VEREDELUNGSVORRICHTUNG ZUM GEISSFUSSVEREDELN**
DEVICE FOR VEE-GRAFTING
DISPOSITIF DE GREFFE EN PIED-DE-BICHE

(30) Priorität: 12.10.1990 AT 2058/90
(43) Veröffentlichungstag der Anmeldung: 27.01.1993
(73) Patentinhaber: FA. PROGLAS, A-1232 Wien (AT)
(72) Erfinder: PISSENBERGER, Siegfried, A-1238 Wien (AT)
(86) Internationale Anmeldenummer: AT9100110
(87) Internationale Veröffentlichungsnummer: WO9206584

(56) Entgegenhaltungen:
- DE-B- 1 142 462
- DE-C- 157 072
- FR-E- 61 138

## Beschreibung

Die Erfindung betrifft eine Veredelungsvorrichtung zum Geißfußveredeln, insbesondere von Kern=und Steinobstbäumen, mit einem winkeligen Messer zum Schneiden einer Kerbe an einem Pfropfkopf, welches mittels eines Kniehebels in einem als Führungsrahmen ausgebildeten äußeren Teil geführt verschieblich angeordnet ist, wobei der äußere Teil in Betriebslage zur Pfropfkopfachse geneigt ist.

Aus der DE-PS-157 072 ist bereits eine Vorrichtung zum Schneiden einer Kerbe bekannt, bei welcher ein winkeliges Messer manuell über einen Hebel in einem Rahmen schräg gegen den Pfropfkopf bewegt wird und dabei eine Kerbe mit zunehmendem Tiefenverlauf schneidet. Mit dieser Vorrichtung kann jedoch nicht der gegengleiche Keil am Schaft des Edelreises angefertigt werden. Das hat zur Folge, daß derartige Veredelungen zumindest zum Teil manuell hergestellt werden müssen, wobei das Herstellen einer Kerbe im Pfropfkopf und eines gegengleichen Keiles an einem Ende des Edelreises im allgemeinen sehr viel Zeit benötigt, während dieser die frischen Schnittflächen bereits auszutrocknen beginnen, was den Veredelungserfolg gefährdet. Zusätzlich kommt es bei der manuellen Tätigkeit sehr leicht zur Verschmutzung der Schnittflächen, worin ebenfalls ein erhebliches Erfolgsrisiko begründet ist. Weiters wirkt es sich nachteilig aus, daß die Vorrichtung nicht auf Pfropfköpfe mit beliebigen Durchmessern aufgesetzt werden kann, wenn die jeweilige Kerbenlänge bzw. Kerbentiefe im Holzteil gleich sein soll.

Aufgabe der Erfindung ist es daher, eine Veredelungsvorrichtung zum Geißfußveredeln vorzuschlagen, bei welcher die obengenannten Nachteile vermieden werden.

Erfindungsgemäß wird diese Aufgabe dadurch gelöst, daß ein im äußeren Teil verschieblicher innerer Teil vorgesehen ist, in dessen vorderem Bereich bzw. an dessen vorderer Kante das Messer angeordnet ist und in dessen hinterem Bereich eine Öffnung für das Edelreis vorhanden ist und daß der äußere Teil an seinem vorderen Bereich eine Öffnung für den Pfropfkopf und in seinem hinteren Bereich eine Öffnung aufweist, an deren vorderer Kante ein winkeliges Messer angeordnet ist und mit der Öffnung für das Edelreis im inneren Teil positionsmäßig zur Deckung bringbar ist.

Mit einer derartigen Vorrichtung wird die vorstehende Zielsetzung in vorteilhafter Weise erreicht. Der Arbeitsablauf besteht darin, daß erstens der nach rechts in Richtung B in seine Ausgangsstellung verschobene innere Teil anschließend im äußeren Teil nach links verschoben wird und dabei mit seinem, am vorderen Ende angeordneten Messer, in einem durch die Geometrie der vorderen Öffnung im äußeren Teil, das ist die Länge und die Tiefe der Durchdringung des äußeren Teiles durch den Pfropfkopf, sich ergebenden Winkel Alpha in Richtung A gegen den durch die vordere Öffnung im äußeren Teil ragenden Pfropfkopf geführt wird. Auf diese Weise entsteht die Kerbe im Pfropfkopf, und zwar in der durch die konstruktive Ausführung des äußeren Teiles vorgegebenen Länge und Tiefe.

Im gleichen oder in einem weiteren Arbeitsgang wird nun der innere Teil wiederum nach rechts in Richtung B in seine Ausgangsstellung verschoben und das Edelreis etwa in einem Gegenwinkel Alpha' durch die nun lagegleichen hinteren Öffnungen in den beiden Teilen geführt. Bei der anschließenden Verschiebung des inneren Teiles nach links in Richtung A wird der Schaft des Edelreises gegen das am vorderen Rand der Öffnung im äußeren Teil angeordnete Messer geführt und dabei keilförmig geschnitten. Da das Messer im äußeren Teil formgleich ist mit dem Messer am inneren Teil, ergeben sich am Pfropfkopf und am Schaft des Edelreises im wesentlichen auch gleiche Kerben- bzw. Keilformen, welche nun paßgenau ineinandergefügt werden können.

Da diese Arbeitsgänge sehr rasch hintereinander bzw. gleichzeitig sowie frei von etwaigen Verschmutzungen der Schnittflächen durchgeführt werden können, kann der Veredelungserfolg weder durch Austrocknung während des Arbeitsablaufes noch durch mangelnde Sauberkeit gefährdet werden.

Eine weitere vorteilhafte Variante der erfindungsgemäßen Vorrichtung besteht darin, daß die ineinander verschieblichen Teile und die an ihnen angeordneten Messer v-förmig ausgebildet sind, wobei das Messer zum Schneiden der Kerbe am Pfropfkopf einen kleineren Öffnungswinkel, vorzugsweise um etwa 3 Grad kleiner, aufweist als das Messer zum Schneiden des Keiles am Edelreisschaft, sodaß dieser in einem geeigneten Preßsitz in die Kerbe eingefügt werden kann.

Weiters ist es vorteilhaft, daß bei der Verwendung von Reisern mit einem Schaftdurchmesser von etwa 7 bis 10 mm die hintere Öffnung im inneren Teil in der Linie der Schnittkante eine Länge von etwa 4 bis 5 cm aufweist, da sich dann Keillängen von etwa derselben Größe ergeben und die Keil- bzw. Kerbentiefen etwa 5 bis 8 mm aufweisen. Vorzugsweise ist die v-Kante der Messer abgerundet ausgebildet.

Bei sehr unterschiedlichen Rindenstärken zwischen Pfropfkopf und Edelreis ist es erforderlich, daß die Kerbentiefe und die Kerbenlänge am Pfropfkopf gegenüber dem Keil am Reisschaft größer ist, damit trotz einer sehr dicken Rinde am Pfropfkopf die Schnittiefe im kambialen und im darunterliegenden Holz in den Kerben bzw. Keilen gleich ist. Dies kann dadurch erreicht werden, daß an der vorderen Öffnung des äußeren Teiles die Kanten nach oben oder nach vorne verstellbar bzw. verschwenkbar ausgebildet sind, so daß durch die nun größer gewordene Öffnung die Kerbe sowohl eine größere Schnittiefe als auch Schnittlänge als der Keil am Edelreisschaft aufweist.

Vorteilhaft ist es auch, die hintere Öffnung im inneren Teil als Durchdringung eines zur Schnittkante geneigten Zylinders auszubilden, da dann das passende Edelreis beim Schneiden des Keiles leicht in der vorgegebenen Winkellage gehalten werden kann.

Insbesondere für nicht exakt in die Öffnung im inneren Teil passende Reisschäfte erweist sich ein an der Öffnung im inneren Teil angeordnetes Widerlager als vorteilhaft, gegen welches das Edelreis während des Schneidvorganges durch den Kniehebelmechanismus gedrückt und so in der gewünschten Lage gehalten wird. Zum Halten des Edelreises während des Schneidvorganges erweist sich ein zusätzlich am Kniehebel angeordneter Haltehebel als vorteilhaft, welcher in der Ausgangsstellung zunächst ohne wesentlichen Verschubweg den Edelreisschaft gegen das Widerlager drückt und diesen sodann gemeinsam mit dem inneren Teil nach vorne bewegt.

Einer weiteren vorteilhaften Ausbildung zufolge sind die vorderen und hinteren Bereiche des inneren und äußeren Teiles getrennt als selbständige Teile ausgeführt und parallel oder übereinander angeordnet. Dabei können die inneren Teile gemeinsam oder einzeln verschoben werden. Dies hat den Vorteil, daß die Vorrichtung kürzer ausgeführt werden kann und insbesondere das Einbringen und Entnehmen des Edelreises in die Vorrichtung aufgrund der verbesserten Zugänglichkeit einfacher gestaltet wird. Außerdem können die beim Schneiden entstehenden Holzreste leichter ausgestoßen werden.

Eine weitere vorteilhafte Möglichkeit besteht darin, daß im inneren Teil ein Halteteil für das Edelreis verschoben wird, welcher zum Freigeben des Edelreisschaftes im inneren Teil nach hinten gegen einen Anschlag verschoben wird und zum Festhalten und anschließenden Schneiden zuerst gegen den Schaft geführt wird und diesen gegen das Widerlager im inneren Teil drückt und sodann diesen gemeinsam mit dem inneren Teil nach vorne bewegt.

Weiters ist es vorteilhaft, daß das die überdeckten Öffnungen im inneren und äußeren Teil durchdringende Ende des Edelreisschaftes in einer Schubhülse zentriert und dabei auch die Schubbewegung gegen das Messer im äußeren Teil unterstützt wird.

Zur Wartung der Vorrichtung ist es weiters vorteilhaft, wenn die in den Teilen integrierten Messer als selbständige Messer austauschbar ausgebildet sind. Auf diese Weise können auch rasch Messer für verschiedene Kerben- bzw. Keilwinkel eingesetzt werden.

Anhand von in der Zeichnung dargestellten Ausführungsbeispielen wird die Erfindung näher erläutert, wobei andere Lösungen, die von den beschriebenen Lösungen abweichen, möglich sind, ohne daß der Rahmen der Erfindung verlassen wird. Insbesondere wird auf die generelle Einsetzbarkeit der Vorrichtung, wie zum Beispiel im Weinbau und bei Ziergehölzen, hingewiesen.

Es zeigen:
- Fig.1:: Die erfindungsgemäße Vorrichtung im Schrägriß, wobei der innere verschiebliche Teil nach oben herausgezeichnet ist.
- Fig.2:: a) Das keilförmig geschnittene Edelreis,
b) der gegengleiche Ausschnitt im Pfropfkopf,
c) die zusammengefügten Teile,
d) geschnittener Edelreisschaft etwa im Maßstab 1:1.
- Fig.3:: a) Die verschwenkbare Kante und
b) die verschiebbare vordere Kante der Öffnung für den Pfropfkopf im äußeren Teil.
- Fig.4:: Das im Winkel Alpha' zur Kante gleichzeitig durch den inneren und äußeren Teil durchgeführte Edelreis.
- Fig.5:: Getrennte und parallel angeordnete vordere und hintere Bereiche des äußeren und inneren Teiles.
- Fig.6:: übereinander angeordnete vordere und hintere Bereiche.
- Fig.7:: Hebelmechanismus zum Verschieben des inneren Teiles und zum Festhalten des Edelreisschaftes.
- Fig.8:: Schraubspindel mit Nocke zum Antreiben des inneren Teiles

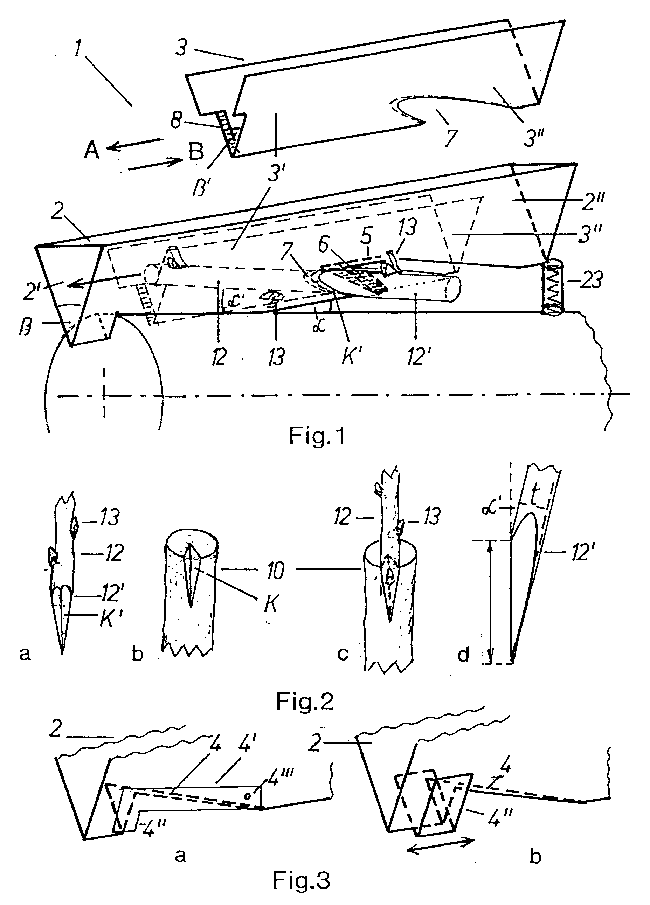

Fig.1 zeigt schematisch die Veredelungsvorrichtung 1, bei welcher zwei vorzugsweise profilgleiche Teile 2,3 vorgesehen sind. Der im äußeren Teil 2 verschiebliche innere Teil 3 ist der besseren Anschaulichkeit wegen nach oben herausgezeichnet. Der innere Teil 3 wird mittels des Kniehebelmechanismus 31,32,33 nach rechts in Richtung B in seine Ausgangslage und nach links in Richtung A zum Schneiden verschoben. Dabei wird die Kerbe K im Pfropfkopf 10 durch das am inneren Teil 3 angeordnete Messer 8 und die Keilform K' am Edelreis 12 durch das Messer 6 geschnitten. Zum Anschlagschutz gegenüber der gegebenenfalls geschlossenen vorderen Seite des Teiles 2 kann das Messer 8 des Teiles 3 gegenüber seiner vorderen Kante zurückversetzt sein. Einer bevorzugten Ausführung zufolge weist der innere Teil 3 im Bereich des Messers 8 in der Länge der Kerbe K einen kleineren Winkel Beta' als der Öffnungwinkel Beta des Messers 6 zum Schneiden des Keiles K' auf, sodaß der Keil K' im Preßsitz in die Kerbe K eingefügt werden kann.

Zur einfacheren Justierung der Vorrichtung am Pfropfkopf kann eine federnde Abstützung 23 im hinteren Bereich 2'' des äußeren Teiles 2 vorgesehen sein.

Fig.2 veranschaulicht in
a) das Edelreis 12 mit Knospen 13 und dem geschnittenen Keil K' am Edelreisschaft 12', in
b) die Kerbe K im Pfropfkopf 10, in
c) den in die Kerbe K eingefügten Keil K' und in
d) die Länge l und die Tiefe t des Keiles K' etwa in natürlicher Große.

In Fig. 3
a) ist die Kante der Öffnung 4 zur Vergrößerung der Kerbentiefe um die Drehachse 4''' verschwenkbar, da bei großer Rindendicke am Pfropfkopf 10 die Gesamtkerbentiefe entsprechend größer gewählt werden muß, um im Holz eine genügend tiefe Kerbe zu erreichen.

Die Vertiefung der Kerbe K kann aber auch gemäß
b) durch eine Parallelverschiebung der vorderen Kante 4'' zur Freigabe eines längeren Öffnungsbereiches erreicht werden, wobei der Schnittwinkel Alpha gleich bleibt.

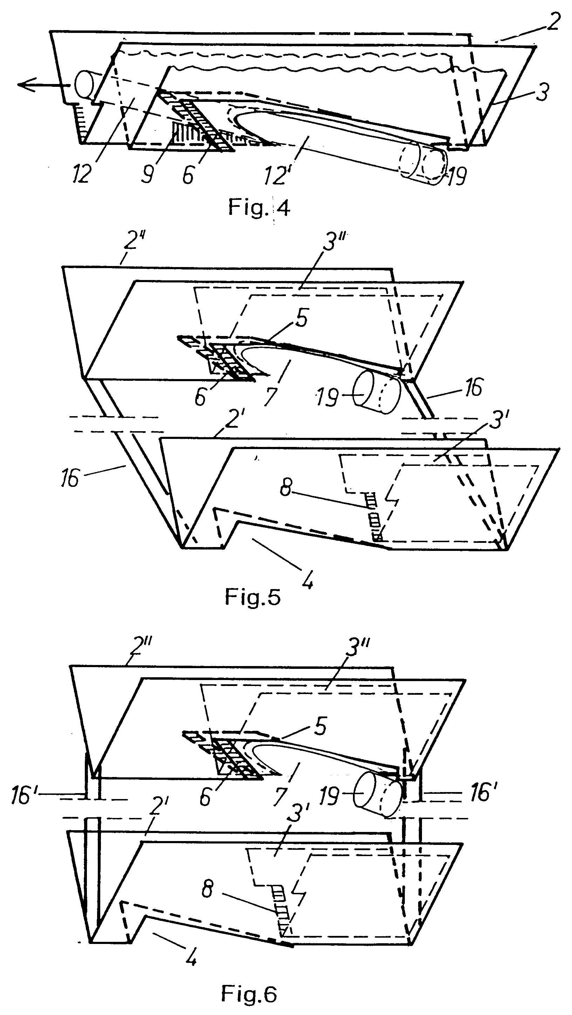

Wie in Fig.4 gezeigt, wird zum Schneiden der Keilform K' am Schaft 12' des Edelreises 12 dieses durch die hintere Öffnung 7 des inneren Teiles 3 und die hintere Öffnung 5 des äußeren Teiles 2 gleichzeitig geführt und der Teil 3 sodann von seiner Ausgangslage in Richtung A verschoben. Dabei schneidet das Messer 6 die Keilform K' am Schaft 12', welcher vorzugsweise in einer paßgenauen Durchdringung der Schenkelebenen bzw. des Körpers des inneren Teiles 3 im Gegenwinkel Alpha' zum Winkel Alpha geführt ist.

In Fig. 5 ist eine Ausführungsvariante dargestellt, bei welcher die vorderen Bereiche 2', 3' von den hinteren Bereichen 2'', 3'' des äußeren Teiles 2 und des inneren Teiles 3 getrennt und als eigenständige Vorrichtungen ausgebildet und parallel angeordnet und, wie schematisch gezeigt, über Stege 16 verbunden sind.

In Fig. 6 ist eine weitere Ausführungsvariante gezeigt, bei welcher die hinteren Bereiche 2'', 3'' zum Scheiden der Keilform K' des Edelreises 12 oberhalb der vorderen Bereiche 2', 3' angeordnet sind. Diese beiden Vorrichtungen sind, wie schematisch angedeutet, durch Stege 16' verbunden.

In beiden vorgenannten Varianten können die getrennten Vorrichtungen zum Schneiden der Kerbe K und der Keilform K' des Edelreises 12 einzeln oder getrennt angetrieben sein. Zur Festlegung und zur Zentrierung des Edelreisschaftes 12' kann nach dem hinteren Ende der Öffnung 7 am inneren Teil 3 eine Zentrier- oder Schubhülse 19 angeordnet sein, über welche während des Schneidvorganges auf das Edelreis 12 eine Schubkraft übertragen wird.

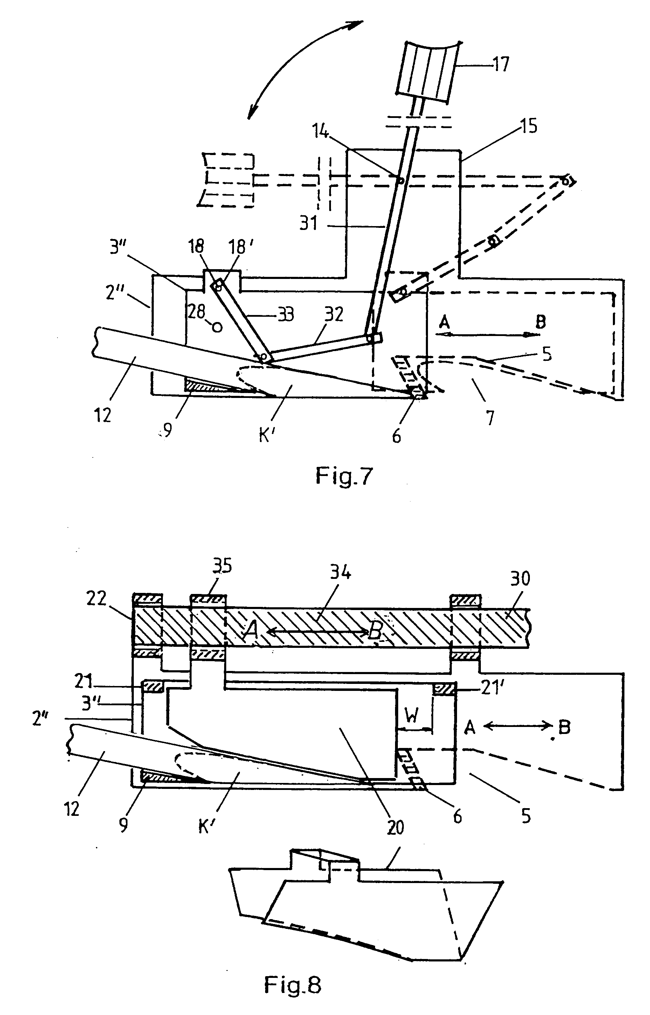

In Fig. 7 ist im Längsschnitt schematisch der Kniehebelmechanismus 31, 32, 33 zum Verschieben der inneren Teile 3 bzw. 3',3'' am Beispiel des inneren Teiles 3'' gezeigt, wobei sich der Griff 17 des Hebels 31 in Endstellung nach dem Schneiden der Keilform K' am Edelreisschaft 12' befindet und die strichlierte Kontur die Ausgangsstellung andeutet. Der Hebel 31, durch welchen der Edelreisschaft 12' gegen das Widerlager 9 gedrückt wird, kann bei leerer Vorrichtung gegen einen Anschlag 28 geführt werden. Gelagert ist der Kniehebelmechanismus 31, 32, 33 an einem am äußeren Teil 2 bzw. 2'' angeordneten Träger 15 mittels der Welle 14 einerseits und an der Welle 18 oder an seitlichen Drehpunkten 18' am inneren Teil 3 bzw. 3', 3'' andererseits. Im letzteren Fall ist der Hebel 33 als Doppelhebei ausgebildet. Die Verstellung des inneren Teiles erfolgt vor dem Aufsetzen auf den Pfropfkopf 10 oder Laden des Edelreises 12 in Richtung B und zum anschließenden Schneiden in Richtung A.

Fig. 8 zeigt im Längsschnitt einen im inneren Teil 3 bzw 3'' verschieblichen Teil 20, welcher über eine Gewindespindel 34 und Nocke 35 angetrieben wird, wobei die Gewindespindel 34 nach Auswahl einer geeigneten Gewindesteigung über den Spindelschaft 30 sowohl manuell als auch durch einen Elektromotor angetrieben werden kann. Die Gewindespindel 34 ist an am äußeren Teil 2 bzw. 2', 2'' angeflanschten Trägern 22 gelagert. Wird der Halteteil 20 in Richtung A verschoben, kommt dieser entweder an einem eingelegten Edelreis 12 oder einem vorderen Anschlag 21 im inneren Teil 3 zum Anliegen und bewegt sodann diesen nach links. Zur Freigabe des Edelreises 12 wird der Halteteil 20 im inneren Teil 3 um die Wegstrecke w nach rechts verschoben und bewegt diesen über einen hinteren Anschlag 21' in Richtung B in die Ausgangsstellung.

## Patentansprüche

1. Veredelungsvorrichtung zum Geißfußveredeln, insbesondere von Kern-und Steinobstbäumen, mit einem winkeligen Messer zum Schneiden einer Kerbe an einem Pfropfkopf, welches mittels eines Kniehebels in einem als Führungsrahmen ausgebildeten äußeren Teil geführt verschiebar angeordnet ist, wobei der äußere Teil in Betriebslage zur Pfropfkopfachse geneigt ist, dadurch gekennzeichnet, daß ein im äußeren Teil(2) verschiebbarer innerer Teil(3) vorgesehen ist, in dessen vorderem Bereich(3') bzw. an dessen vorderer Kante das Messer(8) angeordnet ist und in dessen hinterem Bereich(3'') eine Öffnung(7) für das Edelreis(12) vorhanden ist und daß der äußere Teil(2) an seinem vorderen Bereich(2') eine Öffnung(4) für den Pfropfkopf(10) und in seinem hinteren Bereich(2'') eine Öffnung(5) aufweist, an deren vorderer Kante ein winkeliges Messer(6) angeordnet ist und mit der Öffnung(7) im inneren Teil(3) positionsmäßig zur Deckung bringbar ist.

2. Veredelungsvorrichtung zum Geißfußveredeln nach Anspruch 1, dadurch gekennzeichnet, daß das Messer (6) des äußeren Teiles (2) und das Messer(8) des inneren, verschiebbaren Teiles(3) in an sich bekannter Weise v-förmig ausgebildet ist und vorzugsweise einen abgerundeten bzw. bogenförmigen Kantenbereich aufweist und daß der Öffnungswinkel Beta des Messers(6) größer ist als der Öffnungswinkel Beta' des Messers(8).

3. Veredelungsvorrichtung zum Geißfußveredeln nach Anspruch 1 oder 2, dadurch gekennzeichnet, daß die Öffnung(4) des äußeren Teiles (2) verstellbare Kanten(4',4'') aufweist.

4. Veredelungsvorrichtung zum Geißfußveredeln nach einem der Ansprüche 1 bis 3, dadurch gekennzeichnet, daß am Hebel(32) des Kniehebelmechanismus ein Haltenebel(33) angeordnet ist.

5. Veredelungsvorrichtung zum Geißfußveredeln nach einem der Ansprüche 1 bis 4, dadurch gekennzeichnet, daß die vorderen Bereiche(2',3') von den hinteren Bereichen(2'',3'') des äußeren Teiles(2) sowie des inneren Teiles(3) getrennt als selbständige Teile ausgebildet und parallel nebeneinander oder übereinander angeordnet sind und gemeinsam oder einzeln verschiebbar sind.

6. Veredelungsvorrichtung zum Geißfußveredeln nach einem der Ansprüche 1 bis 5, dadurch gekennzeichnet, daß im inneren Teil(3) ein Halteteil(20) für das Edelreis(12) verschiebbar angeordnet ist und der innere, verschiebbare Teil(3) in die Bewegungsbahn des Halteteiles(20) ragende Anschläge (21,21') aufweist, wobei der Halteteil(20) mit einer auf einer Gewindespindel(34) bewegten Nocke(35) verbunden ist.

7. Veredelungsvorrichtung zum Geißfußveredeln nach einem der Ansprüche 1 bis 6, dadurch gekennzeichnet, daß eine Schubhülse(19) im hinteren Bereich(3'') des Teiles(3) angeordnet ist.

8. Veredelungsvorrichtung zum Geißfußveredeln nach einem der Ansprüche 1 bis 7, dadurch gekennzeichnet, daß die Öffnung(7) durch den Schnitt des Edelreisschaftes(12') mit dem inneren Teil(3) gebildet wird und daß die Öffnung(4) durch den Teilschnitt des Pfropfkopfes(10) mit dem äußeren Teil(2) gebildet wird.

## Claims

1. Device for chip budding, especially of core and stone fruit trees, with an angled knife to cut a notch on a stock, which is arranged so that it can be moved by means of a toggle lever within an external part formed as a guide frame, whereby the external part is inclined in the operating position to the axis of the stock plant, characterised in that, a moveable inner part (3) is provided in the outer part (2) in the forward area (3') of which or on the front edge of which there is a knife (8), and in the rear area (3'') of which there is an opening (7) for the scion (12), and that the outer part (2) has an opening (4) on its forward area (2') for the stock (10), and in its rear area (2'') an opening (5), on the front edge of which an angled knife (6) is fitted which can be positioned to cover opening (7) in the inner part (3).

2. Device for chip budding as in claim 1 characterised in that the knife (6) of the external part (2) and the knife (8) of the internal moveable part (3) are arranged in a v-form in a known way and preferably have a rounded or curved shaped edge area, and that the opening angle Beta of the knife (6) is greater than the opening angle Beta' of the knife (8).

3. Device for chip budding as in claims 1 or 2 characterised in that the opening (4) of the external part (2) has adjustable edges (4', 4'').

4. Device for chip budding as in one of the claims 1 to 3, characterised in that a holding lever (33) is fitted on the lever (32) of the toggle mechanism.

5. Device for chip budding as in one of the claims 1 to 4 characterised in that the front areas (2', 3') are formed separately as parts that are independent of the rear areas (2'', 3'') of the external part (2) as well as the inner part (3) and are arranged parallel, side by side or one above the other, and can be moved together or separately.

6. Device for chip budding as in one of the claims 1 to 5 characterised in that a holding part (20) for the scion (12) is arranged in the internal part (3) so that it can be moved and the internal moveable part (3) has stops (21, 21') that jut out in the movement track of the holding part (20), and the holding part (20) is connected with a moving cam (35) on a threaded spindle (34).

7. Device for chip budding as in one of the claims 1 to 6 characterised in that a thrust bush (19) is fitted in the rear area (3'') of part (3).

8. Device for chip budding as in one of the claims 1 to 7 characterised in that the opening (7) is formed by the cut of the scion shaft (12') with the inner part (3) and that the opening (4) is formed by the part section of the stock (10) with the external part (2).

## Revendications

1. Dispositif de greffage pour greffe à l'anglaise, notamment pour arbres fruitiers à fruits à noyaux ou à pépins, avec un couteau angulaire pour tailler une entaille dans un porte-greffe, agencé de manière à pouvoir coulisser, au moyen d'un levier à genouillère, dans un élément extérieur conçu comme cadre de guidage, l'élément extérieur étant, en position d'utilisation, incliné par rapport à l'axe du porte-greffe; caractérisé par le fait qu'il comporte un élément intérieur (3) pouvant être déplacé dans l'élément extérieur (2), dans la partie avant (3') ou à l'arête avant duquel est agencé le couteau (8), et dans la partie arrière (3'') duquel une ouverture (7) pour le greffon (12) est prévue, et que l'élément extérieur (2) comporte dans sa partie avant (2') une ouverture (4) pour le porte-greffe (10) et dans sa partie arrière (2'') une ouverture (5) à l'arête avant de laquelle est agencé un couteau angulaire (6), et qui peut être positionnée de manière à se superposer à l'ouverture (7) de l'élément intérieur (3).

2. Dispositif de greffage pour greffe à l'anglaise selon la revendication 1, caractérisée par le fait que le couteau (6) de l'élément extérieur (2) et le couteau (8) de l'élément intérieur coulissant (3) présentent une forme en V connue en soi, de préférence arrondie ou en arc au niveau des bords, et que l'angle d'ouverture bêta du couteau (6) est supérieur à l'angle d'ouverture bêta' du couteau (8).

3. Dispositif de greffage pour greffe à l'anglaise selon revendications 1 ou 2, caractérisé par le fait que l'ouverture (4) de l'élément extérieur (2) présente des bords (4', 4'') réglables.

4. Dispositif de greffage pour greffe à l'anglaise selon l'une des revendications 1 à 3, caractérisé par le fait qu'un levier de maintien (33) est prévu ou niveau du levier de genouillère (32).

5. Dispositif de greffage pour greffe à l'anglaise selon l'une des revendications 1 à 4, caractérisé par le fait que les parties avant (2', 3') constituent des éléments indépendants séparés des parties arrières (2'', 3'') des éléments extérieur (2) et intérieur (3), agencés parallèlement ou l'un au-dessus de l'autre, et pouvant être coulissés ensemble ou séparément.

6. Dispositif de greffage pour greffe à l'anglaise selon l'une des revendications 1 à 5, caractérisé par le fait que dans l'élément intérieur (3), un élément de maintien (20) pour le greffon (12) est agencé de manière coulissante, et que l'élément intérieur coulissant (3) présente des butées en saillie (21, 21') dans la voie de déplacement de l'élément de maintien (20), l'élément de maintien (20) étant relié à une came (35) mobile sur tige filetée (34).

7. Dispositif de greffage pour greffe à l'anglaise selon l'une des revendications 1 à 6, caractérisé par le fait qu'une douille de poussée (19) est agencée dans la partie arrière (3'') de l'élément (3).

8. Dispositif de greffage pour greffe à l'anglaise selon l'une des revendications 1 à 7, caractérisé par le fait que l'ouverture (7) est constituée par l'intersection de la tige du greffon (12') avec l'élément intérieur (3), et que l'ouverture (4) est constituée par l'intersection partielle du porte-greffe (10) avec l'élément extérieur (2).
